# EUROPEAN PATENT APPLICATION

(11) **EP 4 429 357 A1**
(43) Date of publication of application: **11.09.2024**
(21) Application number: 21963258.5
(22) Date of filing: 04.11.2021
(51) Int. Cl.: H04W 72/04, H04W 4/70

(54) **TERMINAL AND COMMUNICATION METHOD**

(71) Applicant: NTT DOCOMO, INC., Chiyoda-ku Tokyo 100-6150 (JP)
(72) Inventor: KUMAGAI, Shinya, Tokyo 100-6150 (JP); OKANO, Mayuko, Tokyo 100-6150 (JP); NAGATA, Satoshi, Tokyo 100-6150 (JP)
(74) Representative: Hoffmann Eitle
(86) International application number: PCT/JP2021/040682
(87) International publication number: WO 2023/079662

(57) **Abstract**

A terminal includes: a communication unit configured to receive system information; and a control unit configured to configure a second DL-BWP (Downlink Bandwidth part) that is different from a first DL-BWP for a non-RedCap UE (Reduced Capability UE), based on the system information. In a case where the second DL-BWP is configured, the communication unit receives a first SSB (SS/PBCH block) that is not associated with SIB1 (System information block 1) and RMSI (Remaining minimum system information), and the control unit performs at least one of RRM (Radio Resource Monitoring), RLM (Radio Link Monitoring), BFD (Beam Failure Detection), link recovery, RO (RACH occasions) selection, handover, AGC (Auto gain control), time synchronization, or frequency synchronization, by using the first SSB.

## Description

### FIELD OF THE INVENTION

The present invention relates to a terminal and a communication method in a wireless communication system.

### BACKGROUND OF THE INVENTION

In 3GPP (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). In 5G, various wireless technologies and network architectures are being discussed to satisfy the requirement of a radio link delay of 1 ms or less while achieving throughput of 10 Gbps or more (e.g., Non-Patent Document 1).

In addition, discussions related to a future system later than 5G, or 6G, have been started. In the future system, further improvement of communication performance and wider variety of use cases are expected.

### Citation List

### Non-Patent Document

Non-Patent Document 1: 3GPP TS 38.300 V16.6.0 (2021-06)

### SUMMARY OF THE INVENTION

### TECHNICAL PROBLEM

In LTE or NR, a UE category or a UE capability for the function-reduced IoT (Internet of Things) in which functions, such as functions related to transmission and reception bandwidth part or the number of antennas, to be supported as mandatory by normal terminals are removed. For example, in LTE, eMTC (enhanced Machine Type Communication), NB-IoT (Narrow Band loT) are defined, and, in NR, RedCap (Reduced Capability), etc., are defined. In a case where a DL-BWP (Downlink Bandwidth part) for the loT devices is separately configured, it is necessary for the loT devices to determine which DL-BWP is to be used for receiving a synchronization signal.

The present invention has been made in view of the above points, and it is an object of the present invention to determine a synchronization signal to be used by a function-reduced terminal in the wireless communication system.

### SOLUTION TO PROBLEM

According to the disclosed technique, a terminal is provided. The terminal includes: a communication unit configured to receive system information; and a control unit configured to configure a second DL-BWP (Downlink Bandwidth part) that is different from a first DL-BWP for a non-RedCap UE (Reduced Capability UE), based on the system information. In a case where the second DL-BWP is configured, the communication unit receives a first SSB (SS/PBCH block) that is not associated with SIB1 (System information block 1) and RMSI (Remaining minimum system information), and the control unit performs at least one of RRM (Radio Resource Monitoring), RLM (Radio Link Monitoring), BFD (Beam Failure Detection), link recovery, RO (RACH occasions) selection, handover, AGC (Auto gain control), time synchronization, or frequency synchronization, by using the first SSB.

### ADVANTAGEOUS EFFECTS OF INVENTION

According to the disclosed technique, a synchronization signal used by a function-reduced terminal can be determined in the wireless communication system.

### BRIEF DESCRIPTION OF THE DRAWINGS

[Fig. 1] is a drawing for describing a wireless communication system in an embodiment of the present invention.
[Fig. 2] is a drawing for describing an example of a BWP for a RedCap UE.
[Fig. 3] is a drawing illustrating an example (1) of a BWP for a RedCap UE in an embodiment of the present invention.
[Fig. 4] is a drawing illustrating an example (2) of a BWP for a RedCap UE in an embodiment of the present invention.
[Fig. 5] is a drawing illustrating an example (3) of a BWP for a RedCap UE in an embodiment of the present invention.
[Fig. 6] is a drawing illustrating an example (4) of a BWP for a RedCap UE in an embodiment of the present invention.
[Fig. 7] is a drawing illustrating an example (5) of a BWP for a RedCap UE in an embodiment of the present invention.
[Fig. 8] is a drawing illustrating an example (6) of a BWP for a RedCap UE in an embodiment of the present invention.
[Fig. 9] is a flow chart illustrating an example (1) in which an SSB is received by a RedCap UE in an embodiment of the present invention.
[Fig. 10] is a flow chart illustrating an example (2) in which an SSB is received by a RedCap UE in an embodiment of the present invention.
[Fig. 11] is a drawing illustrating an example of a functional configuration of a base station 10 in an embodiment of the present invention.
[Fig. 12] is a drawing illustrating an example of a functional configuration of a terminal 20 in an embodiment of the present invention.
[Fig. 13] is a drawing illustrating an example of a hardware structure of the base station 10 or the terminal 20 in an embodiment of the present invention.
[Fig. 14] is a drawing illustrating an example of a structure of a vehicle 2001 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

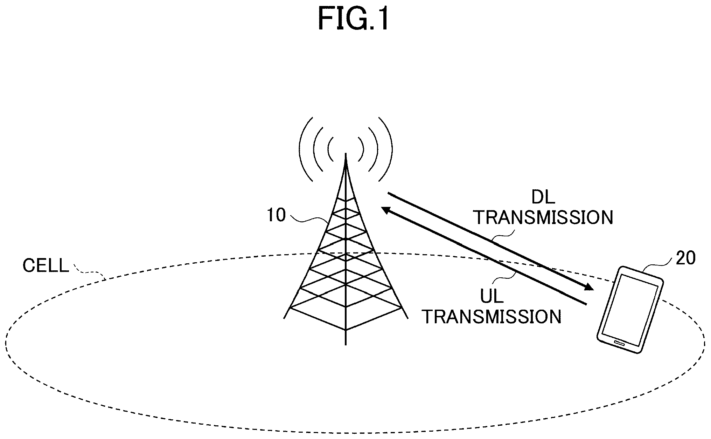

Fig. 1 is a drawing illustrating a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. In addition, a TTI (Transmission Time Interval) in the time domain may be a slot or a sub-slot, or the TTI may be a subframe.

The base station 10 can perform carrier aggregation to communicate with the terminal 20 by bundling a plurality of cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples.

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

The terminal 20 can perform carrier aggregation to communicate with the base station 10 by bundling a plurality of cells (a plurality of CCs). In carrier aggregation, one primary cell and one or more secondary cells are used. In addition, PUCCH-SCell having PUCCH may be used.

In LTE or NR, a UE category or a UE capability for the function-reduced IoT (Internet of Things) in which functions, such as functions related to transmission and reception bandwidth part or the number of antennas, to be supported as mandatory by normal terminals are removed. For example, in LTE, eMTC (enhanced Machine Type Communication), NB-IoT (Narrow Band IoT), etc., are defined, and in NR, RedCap (Reduced Capability), etc., are defined.

For example, the maximum bandwidth supported by a RedCap UE is 20 MHz in FR1 (Frequency Range 1) and 100 MHz in FR2 (Frequency Range 2). In addition, the RedCap UE is required to coexist in the system with a non-RedCap UE (hereinafter, referred to as "non-RedCap UE").

In addition, the RedCap UE and the non-RedCap UE may be enabled to share the same initial DL-BWP (Downlink Bandwidth part) (including the bandwidth and the position) configured by MIB (Master Information Block). On the other hand, an initial DL-BWP having a separated or added bandwidth and position for the RedCap UE may be configured.

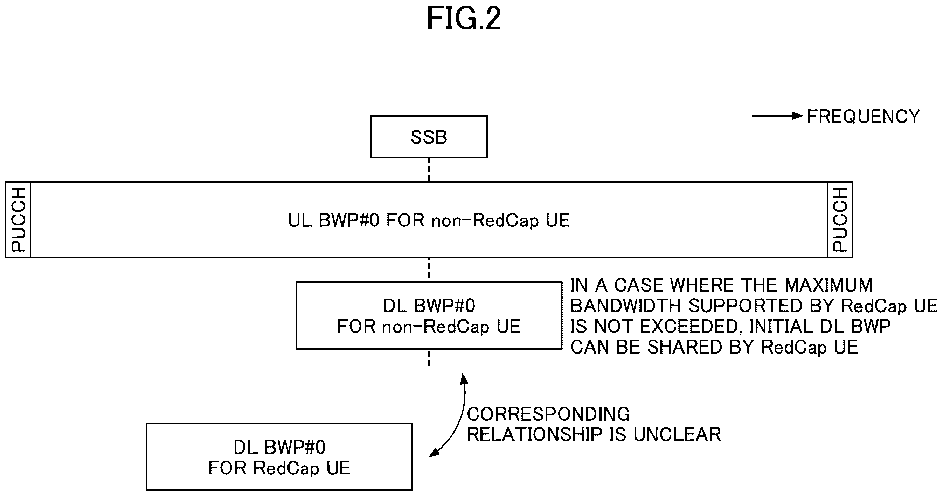

Fig. 2 is a drawing for describing an example of a BWP for a RedCap UE. As illustrated in Fig. 2, in a case where an initial DL-BWP (hereinafter, also referred to as "DL-BWP#0") for the non-RedCap UE does not exceed the maximum bandwidth supported by the RedCap UE, the Redcap UE can share the initial DL-BWP for the non-RedCap UE.

In the current technical specification, in a case of TDD, a DL-BWP and a UL-BWP with the same index must have the same center frequency in order to avoid the RF re-tuning. Here, in a case where an initial UL-BWP for a RedCap UE having the same center frequency as that of an initial DL-BWP configured by MIB is configured, a fragmentation occurs in the PUSCH resources for the non-RedCap UE. In a case of avoiding the fragmentation, the corresponding relationship between DL-BWP#0 for the non-RedCap UE and UL-BWP#0 for the RedCap UE becomes unclear, and thus, a new definition is required to be defined.

In addition, whether an initial DL-BWP that is different from that for the non-RedCap UE is to be supported for the RedCap UE is being discussed. Here, in a case where an initial DL-BWP that is different from that for the non-RedCap UE is to be supported for the RedCap UE, the corresponding relationship with the initial UL-BWP for the RedCap UE is required to be defined.

For example, in FR1, a separate initial DL-BWP for the RedCap UE may be configured for the random access at the time of an idle/inactive mode. In a case where a separate initial DL-BWP for the RedCap UE is configured, a CORESET (Control resource set) and a CSS (Common search space) for the random access may be configured in this initial DL-BWP. In addition, in a case where a separate initial DL-BWP for the RedCap UE is configured for the random access and is not configured for the paging, the RedCap UE is not required to expect that SSB is to be transmitted in this initial DL-BWP.

For example, in FR1, a separate initial DL-BWP for the RedCap UE may be configured for the paging at the time of an idle/inactive mode. In a case where a separate initial DL-BWP for the RedCap UE is configured, a CORESET and a CSS for the paging may be configured in this initial DL-BWP. In a case where an initial DL-BWP separated for the RedCap UE is configured for the paging, the RedCap UE may expect, or is not required to expect, that SSB is to be transmitted in this initial DL-BWP.

For example, in a case where an initial DL-BWP that is separated for the RedCap UE is configured in FR1, in an idle/inactive/connected mode, the RedCap UE is not required to expect that this initial DL-BWP includes the CORESET#0 or SIB1 configured by MIB. On the other hand, the network may configure the CORESET#0 or SIB1 configured by MIB in this initial DL-BWP.

For example, in a case where a DL-BWP is configured in FR1 via RRC signaling, the RedCap UE is not required to expect that this DL-BWP includes the CORESET#0 or SIB1 configured by MIB. On the other hand, the network may configure the CORESET#0 or SIB1 configured by MIB in this DL-BWP.

For example, the RedCap UE is not required to be requested to monitor the periodic CORESET#0 for updating SI (System Information).

For example, the RedCap UE may expect whether SSB is to be transmitted in an active DL-BWP configured via RRC signaling depending on the UE capability. In addition, the RedCap UE that does not support an operation of a case in which SSB is not arranged in an active DL-BWP configured via RRC signaling may expect that SSB is to be transmitted in this DL-BWP. In addition, the RedCap UE that supports an operation of a case in which SSB is not arranged in an active DL-BWP configured via RRC signaling as an option is not required to expect that SSB is to be transmitted in this DL-BWP. In addition, the RedCap UE may expect, or is not required to expect, that SSB is to be transmitted in a separate initial DL-BWP in the connected mode.

For example, in a case where an initial UL-BWP that is wider than the bandwidth for the RedCap UE is configured for the non-RedCap UE during or after the initial access, the separate initial UL-BWP for the RedCap UE may be configured or defined so as not to exceed the maximum bandwidth supported by the RedCap UE.

For example, in a case where a separate initial DL-BWP for the RedCap UE is configured in TDD, the center frequency of this DL-BWP may be the same as that of the separate initial UL-BWP for the RedCap UE. For example, in a case where a separate initial DL-BWP for the RedCap UE is not configured in TDD, the center frequency of the initial DL-BWP configured by MIB may be the same as that of the separate initial UL-BWP for the RedCap UE. It is to be noted that the separate initial UL-BWP for the RedCap UE in which a center frequency that is different from that for the initial DL-BWP is configured may be additionally supported or is not required to be supported.

Regarding the separate initial DL-BWP and/or initial UL-BWP for the RedCap UE, it is necessary to determine 1) to 7) described below.

1) Whether to support TDD and/or FDD
2) Whether to support FR1 and/or FR2
3) Whether to support an RRC idle/inactive/connected mode
4) Whether to support random access and/or paging
5) Whether to include SSB transmission
6) Whether to include CORESET#0
7) Whether to align the center frequency of the initial DL-BWP for the RedCap UE with the center frequency of the initial UL-BWP for the RedCap UE.

Therefore, at least one of 1) or 2) as described below may be configured for the RedCap UE.
1) An initial DL-BWP configured by MIB (CORESET#0 band) and an initial DL-BWP that is different from an initial DL-BWP configured by initialDownlinkBWP included in DownlinkConfigCommonSIB as system information (hereinafter, referred to as "DL-BWP#0*").
2) An initial UL-BWP that is different from an initial UL-BWP configured by initialUplinkBWP included in UplinkConfigCommonSIB as system information (hereinafter, referred to as "UL-BWP#0*").

For example, whether DL-BWP#0* and UL-BWP#0* can be configured for each of: FDD and FR1; FDD and FR2; TDD and FR1; and TDD and FR2, may be defined in the technical specification.

For example, in a case where DL-BWP#0* and UL-BWP#0* are configured, which of cases 1) to 6) described below is to be enabled to apply DL-BWP#0* and UL-BWP#0* may be defined in the technical specification or may be configured via a broadcast signal or high layer signaling.

1) RRC idle mode
2) RRC inactive mode
3) RRC connected mode
4) Random access
5) Paging
6) SIB reception

In each of the above-described cases 1) to 6) in which DL-BWP#0* and UL-BWP#0* are applied, whether or not to include SSB and/or CORESET#0 in DL-BWP#0* may be defined in the technical specification, or may be configured via a broadcast signal or high layer signaling. In addition, the limitation related to the center frequency of DL-BWP#0* and UL-BWP#0* may be defined in the technical specification.

It is to be noted that, hereinafter, "DL-BWP#0" and "UL-BWP#0" are BWPs for the non-RedCap UE, but the "DL-BWP#0" and/or "UL-BWP#0" may be used by the RedCap UE.

The configuration of DL-BWP#0* and/or UL-BWP#0* may be indicated by any conventional SIB, or may be indicated by a SIB that is newly defined for the RedCap UE. For example, DL-BWP#0* and/or UL-BWP#0* may be configured by an information element as described in 1) to 4) below. It is to be noted that SIBredcap is an example of a SIB newly defined for the RedCap UE, and may be referred to as other names. In addition, the name of the information element is merely an example, and may be referred to as other names.

1) initialDownlinkBWPredcap included in DownlinkConfigCommonSIB included in SIB 1
2) initialUplinkBWPredcap included in UplinkConfigCommonSIB included in SIB1
3) initialDownlinkBWPredcap included in DownlinkConfigCommonSIB included in SIBredcap
4) initialUplinkBWPredcap included in UplinkConfigCommonSIB included in SIBredcap

For example, in a case where DL-BWP#0* and/or UL-BWP#0* are not configured, the RedCap UE may use DL-BWP#0 and/or UL-BWP#0 for the non-RedCap UE. For example, the RedCap UE may use the initial DL-BWP (CORESET#0 band) and/or the initial DL-BWP (DL-BWP#0) that is configured by initialDownlinkBWP included in DownlinkConfigCommonSIB. For example, the RedCap UE may use the initial UL-BWP (UL-BWP#0) that is configured by initialUplinkBWP included in UplinkConfigCommonSIB.

For example, in a case where DL-BWP#0* and/or UL-BWP#0* are configured, that (those) BWP(s) may be assumed to be BWP ID#0 for the RedCap UE. For example, in a case where DL-BWP#0* and UL-BWP#0* are both configured, the RedCap UE may expect that the center frequency of DL-BWP#0* and the center frequency of UL-BWP#0* are configured to be identical, or may expect that the center frequencies are configured to be different. In addition, in a case where only DL-BWP#0* is configured, the RedCap UE may expect that the center frequencies of DL-BWP#0* and UL-BWP#0 are configured to be identical, or may expect that the center frequencies are configured to be different. In addition, in a case where only UL-BWP#0* is configured, the RedCap UE may expect that the center frequencies of UL-BWP#0* and DL-BWP#0 are configured to be identical, or may expect that the center frequencies are configured to be different.

In a case where the center frequencies are different between DL-BWP and UL-BWP, the time for switching between UL-BWP and DL-BWP (RF re-tuning time) may be defined. For example, when switching from DL-BWP to UL-BWP, the UE is not required to expect that UL is to be scheduled or UL is to be configured in the RF re-tuning time, and transmission or no transmission may be determined based on the UE implementation. For example, when switching from UL-BWP to DL-BWP, the UE is not required to expect that DL is to be scheduled or DL is to be configured in the RF re-tuning time, and reception or no reception may be determined based on the UE implementation.

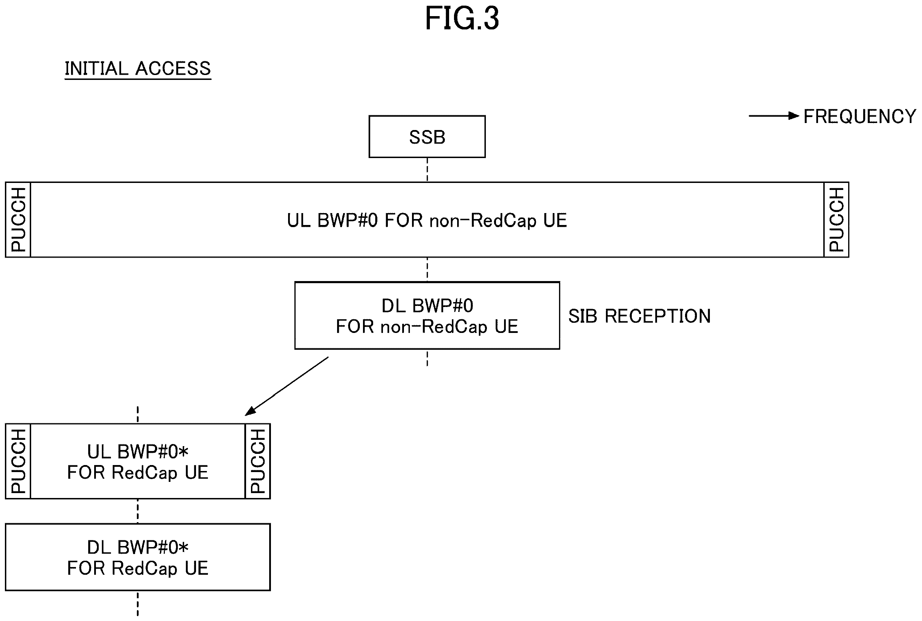

Fig. 3 is a drawing illustrating an example (1) of an operation of the RedCap UE in an embodiment of the present invention. Fig. 3 is an example in which DL-BWP#0* and UL-BWP#0* are configured by an SIB. As illustrated in Fig. 3, the RedCap UE receives an SIB in DL-BWP#0 for the non-RedCap UE. DL-BWP#0* that is different from DL-BWP#0 and UL-BWP#0* that is different from UL-BWP#0 are configured by the SIB. It is to be noted that the width, the position of the frequency domain, etc., of each BWP are examples, and, for example, DL-BWP#0* and UL-BWP#0* may be allocated in the different frequency domain.

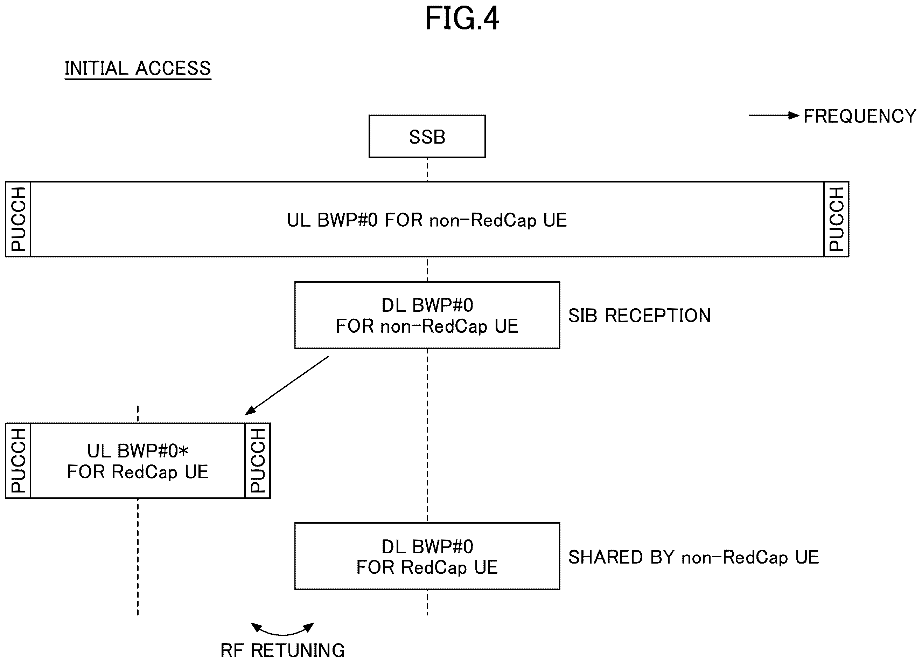

Fig. 4 is a drawing illustrating an example (2) of an operation of the RedCap UE in an embodiment of the present invention. Fig. 4 is an example in which UL-BWP#0* is configured by an SIB. As illustrated in Fig. 4, the RedCap UE receives an SIB in DL-BWP#0 for the non-RedCap UE. UL-BWP#0* that is different from UL-BWP#0 is configured by the SIB. DL-BWP#0 for the RedCap UE is shared by the non-RedCap UE. In Fig. 4, the center frequencies of UL-BWP#0* and DL-BWP#0 are different, and thus, the RF re-tuning is needed by the RedCap UE when switching between UL and DL. It is to be noted that the width, the position of the frequency domain, etc., of each BWP are examples, and, for example, UL-BWP#0* may be allocated in the different frequency domain.

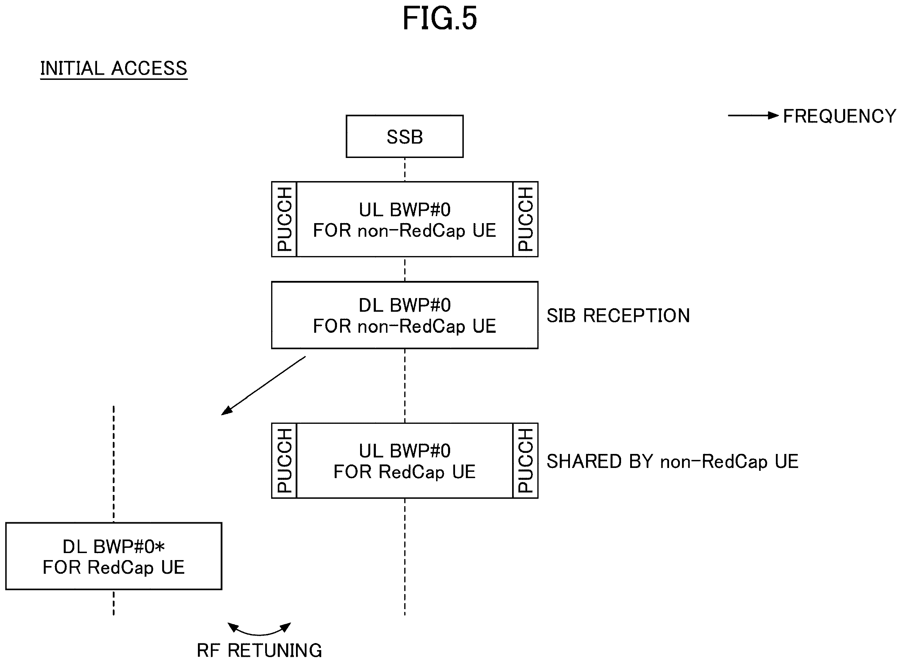

Fig. 5 is a drawing illustrating an example (3) of an operation of the RedCap UE in an embodiment of the present invention. Fig. 5 is an example in which DL-BWP#0* is configured by an SIB. As illustrated in Fig. 5, the RedCap UE receives an SIB in DL-BWP#0 for the non-RedCap UE. UL-BWP#0* that is different from UL-BWP#0 is configured by the SIB. The UL-BWP#0 for the RedCap UE is shared by the non-RedCap UE. In Fig. 5, the center frequencies of UL-BWP#0 and DL-BWP#0* are different, and thus, the RF re-tuning is needed by the RedCap UE when switching between UL and DL. It is to be noted that the width, the position of the frequency domain, etc., of each BWP are examples, and, for example, DL-BWP#0* may be allocated in the different frequency domain.

In a case where UL-BWP#0* is configured, the RedCap UE may perform UL transmission related to random access in this BWP. With respect to the UL-BWP#0*, the configuration related to random access may be indicated by the conventional SIB or by a new SIB. For example, the configuration related to random access may be performed based on rach-ConfigCommon included in BWP-UplinkCommon, may be performed based on pusch-ConfigCommon included in BWP-UplinkCommon, or may be performed based on pucch-ConfigCommon included in BWP-UplinkCommon.

In a case where an SSB is not included in DL-BWP corresponding to UL-BWP#0*, SSB reception in the DL-BWP may be newly defined or configured. For example, the RedCap UE may receive SSBs in 20 PRBs at the lower end, the center, or the upper end, of the DL-BWP with a predetermined periodicity (for example, 20 ms). In addition, for example, the PRB position and the SSB periodicity of the SSB transmission in the DL-BWP may be configured by the network.

In a case where DL-BWP#0* is configured, the RedCap UE may perform DL reception related to random access in this BWP. With respect to the DL-BWP#0*, the configuration related to random access may be indicated by the conventional SIB or by a new SIB. For example, the configuration related to random access may be performed based on pdsch-ConfigCommon included in BWP-DownlinkCommon, or may be performed based on pdcch-ConfigCommon included in BWP-DownlinkCommon.

In addition, an information element controlResourceSetZero included in pdcch-ConfigCommon is a parameter of CORESET#0 for configuring CSS or USS (UE-specific search space) and may be configured in DL-BWP#0* or may be configured in DL-BWP#0 for the RedCap UE.

In addition, an information element searchSpaceZero included in pdcch-ConfigCommon is a parameter for configuring CSS#0 and may be configured in DL-BWP#0* or may be configured in DL-BWP#0 for the RedCap UE.

In a case where an SSB is not included in DL-BWP#0*, SSB reception in the DL-BWP#0* may be newly defined or configured. For example, the RedCap UE may receive SSBs in 20 PRBs at the lower end, the center, or the upper end, of the DL-BWP with a predetermined periodicity (for example, 20 ms). In addition, for example, the PRB position and the SSB periodicity of the SSB transmission in DL-BWP#0* may be configured by the network.

In a case where DL-BWP#0* and/or UL-BWP#0* are configured, the BWP may be considered as an active BWP in the connected mode. The BWP may be considered as an active BWP in the connected mode when the BWP is configured by firstActiveDownlinkBWP-Id/firstActiveUplinkBWP-Id (that is, ID=0). The BWP may be considered as an active BWP in the connected mode regardless of the configuration of firstActiveDownlinkBWP-Id/firstActiveUplinkBWP-Id.

In a case where an SSB is not included in DL-BWP#0*, SSB reception in the DL-BWP#0* may be newly defined or configured. For example, the RedCap UE may receive SSBs in 20 PRBs at the lower end, the center, or the upper end, of the DL-BWP with a predetermined periodicity (for example, 20 ms). In addition, for example, the PRB position and the SSB periodicity of the SSB transmission in DL-BWP#0* may be configured by the network. The expectation related to SSB reception may vary depending on the UE capability. For example, the UE capability that does not expect SSB reception in DL-BWP#0* may be defined, or the UE capability that expects SSB reception in DL-BWP#0* may be defined.

In a case where DL-BWP#0* is configured, the RedCap UE may perform paging reception in this BWP. With respect to this BWP, the configuration related to paging reception may be indicated by the conventional SIB or by a new SIB. For example, the configuration related to paging may be performed based on pdsch-ConfigCommon included in BWP-DownlinkCommon, or may be performed based on pdcch-ConfigCommon included in BWP-DownlinkCommon.

In addition, an information element controlResourceSetZero included in pdcch-ConfigCommon is a parameter of CORESET#0 for configuring CSS or USS and may be configured in DL-BWP#0* or may be configured in DL-BWP#0 for the RedCap UE.

In addition, an information element searchSpaceZero included in pdcch-ConfigCommon is a parameter for configuring CSS#0 and may be configured in DL-BWP#0* or may be configured in DL-BWP#0 for the RedCap UE.

In addition, the configuration related to paging in DL-BWP#0* may be indicated by an information element firstPDCCH-MonitoringOccasionOfPO included in pdcch-ConfigCommon. The search space ID for paging reception in DL-BWP#0* may be indicated by an information element pagingSearchSpace included in pdcch-ConfigCommon.

Parameters described in 1) to 4) below may be indicated by the conventional SIB1 or by a newly defined SIB.

1) Ns
2) nAndPagingFrameOffset
3) nrofPDCCH-MonitoringOccasionPerSSB-InPO
4) Default DRX cycle length

In a case where an SSB is not included in DL-BWP#0*, SSB reception in the DL-BWP#0* may be newly defined or configured. For example, the RedCap UE may receive SSBs in 20 PRBs at the lower end, the center, or the upper end, of the DL-BWP with a predetermined periodicity (for example, 20 ms). In addition, for example, the PRB position and the SSB periodicity of the SSB transmission in DL-BWP#0* may be configured by the network.

In a case where DL-BWP#0* is configured, the RedCap UE may perform SIB reception in this BWP. With respect to this BWP, the configuration related to SIB reception may be indicated by the conventional SIB or by a new SIB. For example, the configuration related to SIB may be performed based on pdsch-ConfigCommon included in BWP-DownlinkCommon, or may be performed based on pdcch-ConfigCommon included in BWP-DownlinkCommon.

In addition, an information element controlResourceSetZero included in pdcch-ConfigCommon is a parameter of CORESET#0 for configuring CSS or USS and may be configured in DL-BWP#0* or may be configured in DL-BWP#0 for the RedCap UE.

In addition, an information element searchSpaceZero included in pdcch-ConfigCommon is a parameter for configuring CSS#0 and may be configured in DL-BWP#0* or may be configured in DL-BWP#0 for the RedCap UE.

In addition, the configuration related to acquisition of SIB2 system information and the subsequent system information in DL-BWP#0* may be indicated by an information element searchSpaceOtherSystemInformation included in pdcch-ConfigCommon. The search space ID for SIB1 reception in DL-BWP#0* may be indicated by an information element searchSpaceSIB1 included in pdcch-ConfigCommon.

In a case where an SSB is not included in DL-BWP#0*, SSB reception in the DL-BWP#0* may be newly defined or configured. For example, the RedCap UE may receive SSBs in 20 PRBs at the lower end, the center, or the upper end, of the DL-BWP with a predetermined periodicity (for example, 20 ms). In addition, for example, the PRB position and the SSB periodicity of the SSB transmission in DL-BWP#0* may be configured by the network.

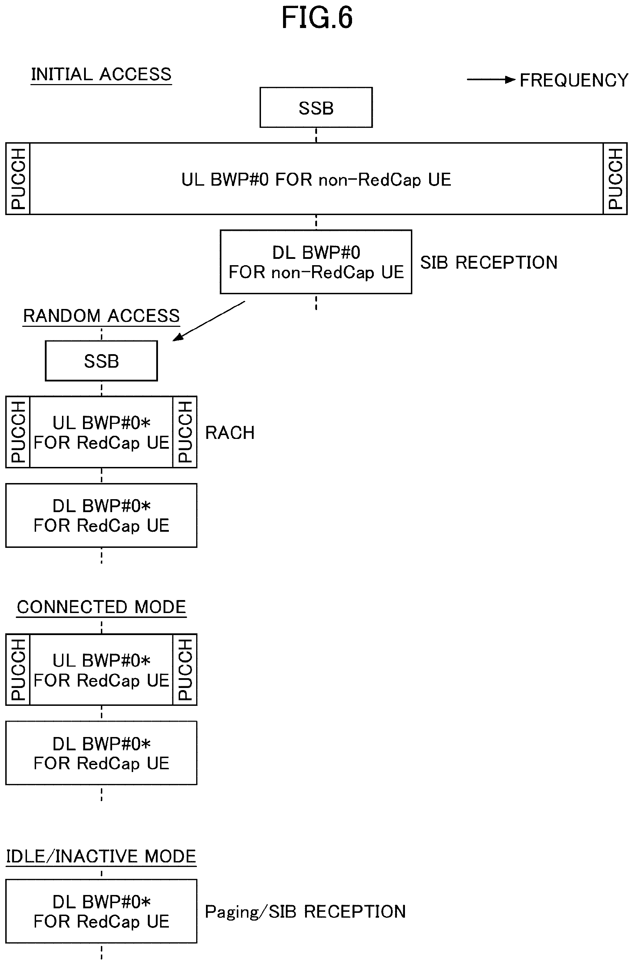

Fig. 6 is a drawing illustrating an example (4) of an operation of the RedCap UE in an embodiment of the present invention. Fig. 6 is an example in which DL-BWP#0* and UL-BWP#0* are configured by an SIB. As illustrated in Fig. 6, the RedCap UE receives an SIB in DL-BWP#0 for the non-RedCap UE. DL-BWP#0* that is different from DL-BWP#0 and UL-BWP#0* that is different from UL-BWP#0 are configured by the SIB.

In the random access, the RedCap UE may transmit HARQ-ACK corresponding to Msg.1/3/A and Msg.4/B in UL-BWP#0* and may receive Msg.2/4/B and an SSB in DL-BWP#0*. In the connected mode, the RedCap UE may transmit a reference signal/control signal and data in UL-BWP#0*, and may receive an SSB/reference signal/control signal and data in DL-BWP#0*. In the idle/inactive mode, the RedCap UE receives an SSB/paging and an SIB in DL-BWP#0*.

According to an operation as described above, the center frequencies of BWPs for the RedCap UE can be aligned. It is to be noted that the width, the position of the frequency domain, etc., of each BWP are examples, and, for example, DL-BWP#0* and UL-BWP#0* may be allocated in the different frequency domain.

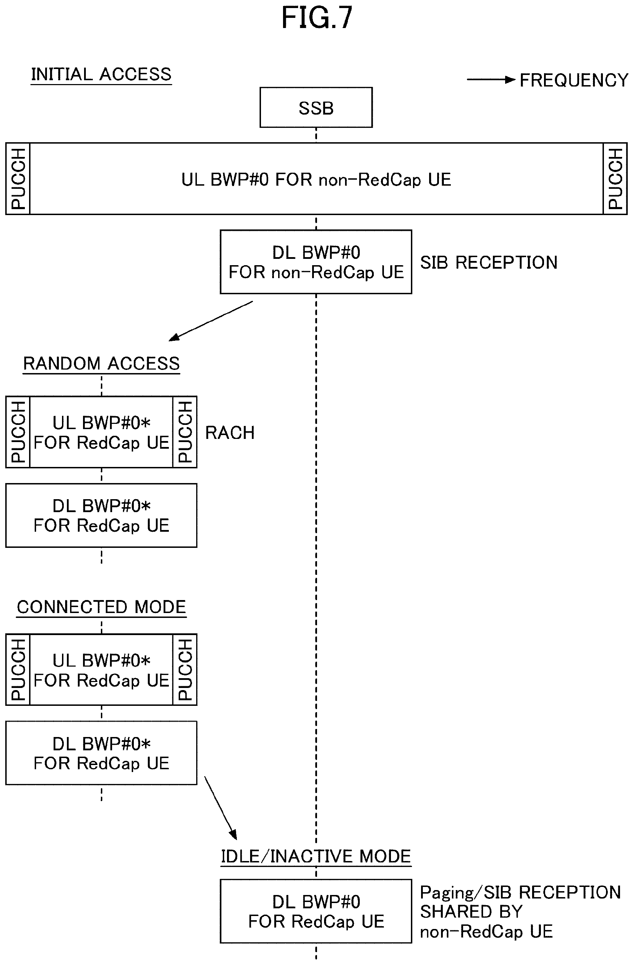

Fig. 7 is a drawing illustrating an example (5) of an operation of the RedCap UE in an embodiment of the present invention. Fig. 7 is an example in which DL-BWP#0* and UL-BWP#0* are configured by an SIB. As illustrated in Fig. 7, the RedCap UE receives an SIB in DL-BWP#0 for the non-RedCap UE. DL-BWP#0* that is different from DL-BWP#0 and UL-BWP#0* that is different from UL-BWP#0 are configured by the SIB.

In the random access, the RedCap UE may transmit HARQ-ACK corresponding to Msg.1/3/A and Msg.4/B in UL-BWP#0* and may receive Msg.2/4/B in DL-BWP#0*. In addition, in a case where SSB reception is needed (for example, the reception periodicity is defined/configured), the SSB reception may be performed using DL-BWP#0 for the RedCap UE by performing the RF re-tuning. Msg.2/4/B may be received in DL-BWP#0* by performing the RF re-tuning after the SSB reception. In the connected mode, the RedCap UE may transmit a reference signal/control signal and data in UL-BWP#0*, and may receive a reference signal/control signal and data in DL-BWP#0*. In addition, in a case where SSB reception is needed (for example, the reception periodicity is defined/configured), the SSB reception may be performed using DL-BWP#0 for the RedCap UE by performing the RF re-tuning. A reference signal/control signal and data may be received in DL-BWP#0* by performing the RF re-tuning after the SSB reception.

In the idle/inactive mode, the RedCap UE receives a paging and an SIB using DL-BWP#0 for the RedCap UE. DL-BWP#0 for the RedCap UE is shared by the non-RedCap UE.

According to an operation as described above, the center frequencies of BWPs for the RedCap UE can be aligned. In addition, the SSB can be shared with the non-RedCap UE without requiring an additional SSB for receiving paging and an SIB at the time of an idle/inactive mode. It is to be noted that the width, the position of the frequency domain, etc., of each BWP are examples, and, for example, DL-BWP#0* and UL-BWP#0* may be allocated in the different frequency domain.

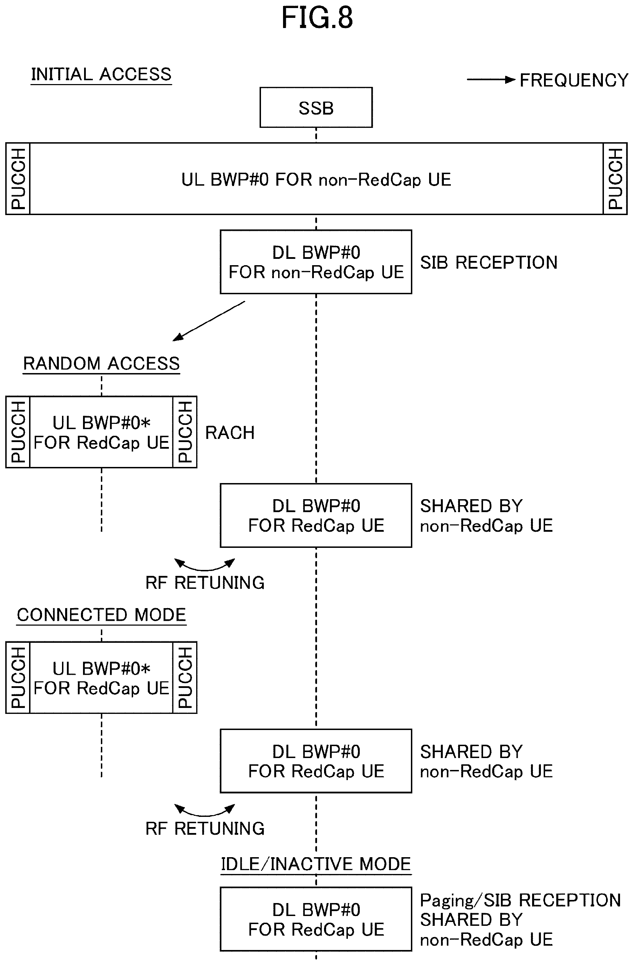

Fig. 8 is a drawing illustrating an example (6) of an operation of the RedCap UE in an embodiment of the present invention. Fig. 8 is an example in which UL-BWP#0* is configured by an SIB. As illustrated in Fig. 8, the RedCap UE receives an SIB in DL-BWP#0 for the non-RedCap UE. UL-BWP#0* that is different from UL-BWP#0 is configured by the SIB.

In the random access, the RedCap UE may transmit HARQ-ACK corresponding to Msg.1/3/A and Msg.4/B in UL-BWP#0* and may receive Msg.2/4/B and an SSB in DL-BWP#0 for the RedCap UE. DL-BWP#0 for the RedCap UE is shared by the non-RedCap UE. The RedCap UE is required to perform RF re-tuning when switching between UL and DL in the random access.

In the connected mode, the RedCap UE may transmit a reference signal/control signal and data in UL-BWP#0*, and may receive an SSB/reference signal/control signal and data in DL-BWP#0 for the RedCap UE. DL-BWP#0 for the RedCap UE is shared by the non-RedCap UE. The RedCap UE is required to perform RF re-tuning when switching between UL and DL in the connected mode.

In the idle/inactive mode, the RedCap UE receives an SSB/paging and an SIB using DL-BWP#0 for the RedCap UE. DL-BWP#0 for the RedCap UE is shared by the non-RedCap UE.

According to an operation as described above, the SSB can be shared with the non-RedCap UE without requiring an additional SSB for receiving paging and an SIB at the time of an idle/inactive mode. It is to be noted that the width, the position of the frequency domain, etc., of each BWP are examples, and, for example, UL-BWP#0* may be allocated in the different frequency domain.

Here, feasibility of using NCD (Non-Cell Defined) - SSB as an alternative to CD (Cell Defined) - SSB is being discussed. It is to be noted that the CD-SSB is defined as an SSB that is associated with RMSI and SIB1, and the NCD-SSB is defined as an SSB that is not associated with RMSI and SIB1. For example, the SSB at the time of random access illustrated in Fig. 6 may be an NCD-SSB.

For example, the NCD-SSB may be available for measurements that are performed in serving and non-serving cells, and are performed in idle, inactive and/or connected modes, with respect to all or part of RRM (Radio Resource Monitoring), RLM (Radio Link Monitoring), BFD (Beam Failure Detection), link recovery, RO (RACH occasion) selection, mobility, time and/or frequency tracking and AGC (Auto gain control).

For example, with respect to the initial or non-initial DL-BWP for a RedCap UE, NCD-SSB may be used as a QCL source of another DL channel or DL signal in an idle mode, inactive mode, and/or connected mode, or NCD-SSB may be spatially associated with a UL channel or UL signal.

For example, in a case where NCD-SSB and CD-SSB are transmitted in the serving cell of a RedCap UE, the PCIs (Physical Cell Identifiers) indicated by NCD-SSB and CD-SSB may be the same or may be different.

For example, in a case where NCD-SSB and CD-SSB are transmitted in the serving cell of a RedCap UE, the periodicities, transmission powers, SSB indexes, and QCL sources that are indicated by an information element ssb-PositionsInBurst or an information element ServingCellConfigCommon included in SIB1 may be the same or may be different between NCD-SSB and CD-SSB.

For example, in order to assure coexistence with a non-RedCap UE, limitations related to frequency positions or periodicities may be introduced for NCD-SSB.

For example, in a case where CD-SSB is not transmitted in the non-initial DL-BWP of a RedCap UE, periodically transmitted CSI-RS may be used as an alternative to SSB in the non-initial DL-BWP. Alternatively, the RedCap UE may perform RF retuning in the measurement gap outside the active BWP for BWPs without CORESET#0 nor SSB.

For example, the RedCap UE may be able to use CD-SSB for retuning without using NCD-SSB with longer periodicity.

For example, the RedCap UE may be able to use NCD-SSB for measurement.

Whether or not NCD-SSB can be used as an alternative to CD-SSB is unclear. Accordingly, the RedCap UE may operate as described in 1) to 7) below.
1) How and which of CD-SSB or NCD-SSB is to be used for measurement in the serving cell and non-serving cell in an idle mode, inactive mode, and/or connected mode may be determined. How and which of CD-SSB or NCD-SSB is to be used with respect to all of or a part of RRM, RLM, BFD, link recovery, RO selection, mobility, time/frequency tracking, and AGC may be determined.
2) How and which of CD-SSB or NCD-SSB is to be used as a QCL source of another DL channel or DL signal in an idle mode, inactive mode, and/or connected mode in the initial or non-initial DL-BWP of a RedCap UE may be determined. In addition, how and which of CD-SSB or NCD-SSB can be spatially associated with a UL channel or UL signal may be determined.
3) In a case where NCD-SSB and CD-SSB are transmitted in the serving cell of a RedCap UE, whether or not the PCIs (Physical Cell Identifiers) indicated by NCD-SSB and CD-SSB are the same may be determined.
4) In a case where NCD-SSB and CD-SSB are transmitted in the serving cell of a RedCap UE, whether or not the periodicities, transmission powers, SSB indexes, and QCL sources indicated by an information element ssb-PositionsInBurst or an information element ServingCellConfigCommon included in SIB1 are the same between NCD-SSB and CD-SSB may be determined.
5) In order to assure coexistence with a non-RedCap UE, whether or not the limitations related to frequency positions or periodicities are to be introduced for NCD-SSB may be determined.
6) In a case where CD-SSB is not transmitted in the non-initial DL-BWP of a RedCap UE, whether or not the periodically transmitted CSI-RS can be used as an alternative to SSB in the non-initial DL-BWP may be determined. Alternatively, whether or not the RedCap UE can perform RF retuning in the measurement gap outside the active BWP for BWPs without CORESET#0 nor SSB may be determined.
7) Whether or not the RedCap UE can use CD-SSB for retuning without using NCD-SSB with longer periodicity may be determined.

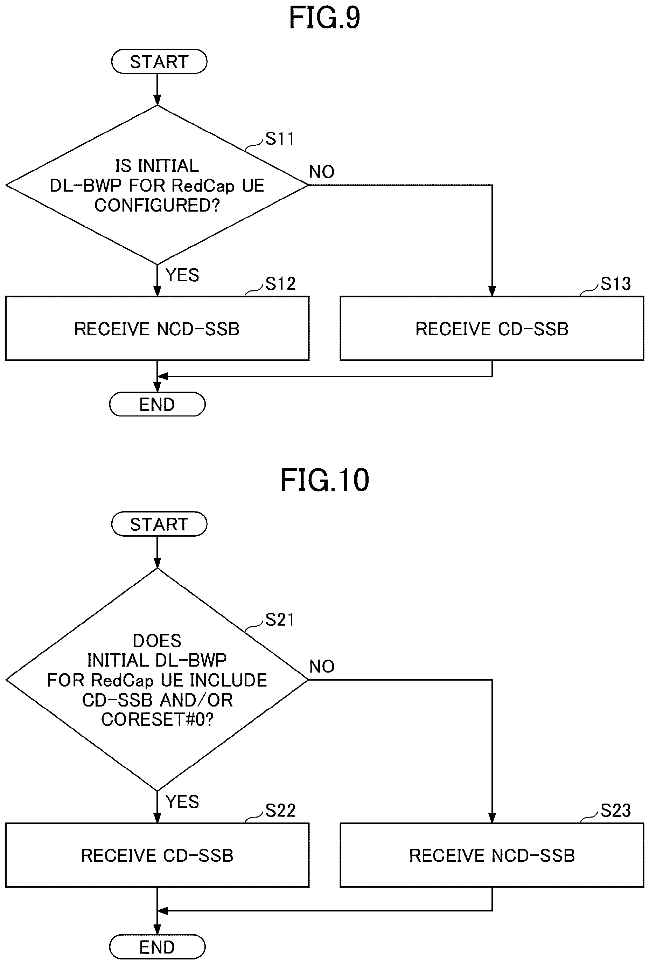

Fig. 9 is a flow chart illustrating an example (1) in which the RedCap UE receives an SSB in an embodiment of the present invention. In step S11, the terminal 20 determines whether or not an initial DL-BWP for a RedCap UE is configured. In a case where the initial DL-BWP for a RedCap UE is configured (YES in S11), proceeds to step S12, and, in a case where the initial DL-BWP for a RedCap UE is not configured (NO in S11), proceeds to step S13.

In step S12, the terminal 20 receives NCD-SSB. On the other hand, the terminal 20 receives CD-SSB in step S13.

As described above, the initial DL-BWP for a RedCap UE is an initial DL-BWP that is different from the initial DL-BWP configured by MIB in CORESET#0 or the initial DL-BWP configured by initialDownlinkBWP of an information element DownlinkConfigCommonSIB included in SIB, and, hereinafter, is referred to as DL-BWP#0*. The DL-BWP#0* may be configured by system information, or may be configured by another upper layer signaling.

It is to be noted that NCD-SSB is not limited to SSB, and may be a DL signal other than CD-SSB such as a periodic CSI-RS, for example.

Fig. 10 is a flow chart illustrating an example (2) in which the RedCap UE receives an SSB in an embodiment of the present invention. In step S21, the terminal 20 determines whether or not the initial DL-BWP for a RedCap UE, that is, DL-BWP#0*, includes CD-SSB and/or CORESET#0. In a case where DL-BWP#0* includes CD-SSB and/or CORESET#0 (YES in S21), proceeds to step S22, and, in a case where DL-BWP#0* does not include CD-SSB and/or CORESET#0 (NO in S21), proceeds to step S23.

In step S22, the terminal 20 receives CD-SSB. On the other hand, the terminal 20 receives NCD-SSB in step S23.

It is to be noted that the terminal 20 may receive CD-SSB in both step S22 and step S23. In addition, the terminal 20 may receive NCD-SSB in both step S22 and step S23.

It is to be noted that whether CD-SSB is to be received or NCD-SSB is to be received may be determined based on a UE operation in measurements in the serving cell and non-serving cell. The terminal 20 may receive CD-SSB or NCD-SSB regardless of a UE operation in measurements in the serving cell and non-serving cell. The terminal 20 may receive one of CD-SSB or NCD-SSB, based on a UE operation in measurements in the serving cell and non-serving cell.

Physical cell IDs indicated in NCD-SSB and CD-SSB may be the same or may be different. Configurations related to reception of NCD-SSB and CD-SSB may be the same or may be different. The range of configuration values related to the NCD-SSB reception may be a subset of a range of configuration values related to the CD-SSB reception.

In a case of receiving CD-SSB outside the active DL-BWP, a measurement gap for receiving the CD-SSB may be specified or configured.

As described above, in both cases in which DL-BWP#0* includes or does not include CD-SSB and/or CORESET#0, whether CD-SSB is to be received or NCD-SSB is to be received may be the same, or, whether CD-SSB is to be received or NCD-SSB is to be received may be different between the cases in which DL-BWP#0* includes or does not include CD-SSB and/or CORESET#0.

In addition, as described above, whether CD-SSB is to be received or NCD-SSB is to be received may be the same between UE operations in measurements in the serving cell and non-serving cell, or whether CD-SSB is to be received or NCD-SSB is to be received may be different between UE operations in measurements in the serving cell and non-serving cell.

In a case where DL-BWP#0* includes CD-SSB and/or CORESET#0, the terminal 20 may receive CD-SSB or may use the measurement result of CD-SSB for the sake of at least one of the following operations a) to h).

a) RRM
b) RLM
c) BFD
d) Link recovery
e) RO selection
f) Mobility (handover)
g) Time and/or frequency tracking
h) AGC

In addition, in a case where DL-BWP#0* does not include CD-SSB and/or CORESET#0, the terminal 20 may receive NCD-SSB or may use the measurement result of NCD-SSB for the sake of at least one of the above-described operations a) to h).

In addition, the terminal 20 may receive CD-SSB or may use the measurement result of CD-SSB for the sake of at least one of the above-described operations a) to h) regardless of whether DL-BWP#0* includes CD-SSB and/or CORESET#0. In addition, the terminal 20 may receive NCD-SSB or may use the measurement result of NCD-SSB for the sake of at least one of the above-described operations a) to h) regardless of whether DL-BWP#0* includes CD-SSB and/or CORESET#0.

The above-described operations related to receptions of CD-SSB or NCD-SSB may be specified in the technical specifications or may be configured by upper layer signaling.

Physical cell IDs indicated in NCD-SSB and CD-SSB may be the same or may be different. For example, in a case where NCD-SSB is configured for measurements in the serving cell and/or non-serving cell, the physical cell ID indicated by NCD-SSB may be the same as, or may be different from, the physical cell ID indicated by CD-SSB.

For example, in a case where DL-BWP#0* includes CD-SSB and/or CORESET#0, the physical cell ID indicated by NCD-SSB may be the same as, or may be different from, the physical cell ID indicated by CD-SSB.

For example, in a case where DL-BWP#0* does not include CD-SSB and/or CORESET#0, the physical cell ID indicated by NCD-SSB may be the same as, or may be different from, the physical cell ID indicated by CD-SSB.

For example, the physical cell ID indicated by NCD-SSB may be the same as, or may be different from, the physical cell ID indicated by CD-SSB regardless of whether DL-BWP#0* includes CD-SSB and/or CORESET#0.

It is to be noted that the physical cell ID of NCD-SSB may indicated by PSS and SSS in the same way as CD-SSB.

Configurations related to reception may be the same or may be different between NCD-SSB and CD-SSB. For example, the corresponding relationship between NCD-SSB and CD-SSB may be specified or configured, and the corresponding configuration of CD-SSB may be applied to the configuration related to the NCD-SSB reception.

In addition, the configuration related to the NCD-SSB reception may be indicated by upper layer signaling. The range of configuration values related to the NCD-SSB reception may be a subset of a range of configuration values related to the CD-SSB reception. For example, the target of the configuration values may be transmission periodicities, time and/or frequency positions, the number of transmission SSBs, QCL sources, etc. The upper layer signaling may be UE-specific RRC signaling, or may be SIB1 corresponding to NCD-SSB.

It is to be noted that the configuration related to the SSB reception may be SIB1, or may be MeasObjectNR.

As described above, in a case of receiving CD-SSB outside the active DL-BWP, a measurement gap for receiving the CD-SSB may be specified or configured. The terminal 20 is not required to perform DL reception nor UL transmission in the active DL-BWP during the measurement gap.

For example, regarding the dynamic DL/UL for which transmission and reception of DL/UL are indicated via DCI, an indication of DL reception and/or UL transmission during the measurement gap via DCI is not required to be assumed.

For example, regarding the dynamic DL/UL for which transmission and reception of DL/UL are indicated via DCI, in a case where an indication of DL reception and/or UL transmission during the measurement gap via DCI is received, the terminal 20 may receive CD-SSB and is not required to perform dynamic DL/UL transmission and reception via DCI.

For example, regarding the dynamic DL/UL for which transmission and reception of DL/UL are indicated via DCI, in a case where an indication of DL reception and/or UL transmission during the measurement gap via DCI is received, the terminal 20 may perform dynamic DL/UL transmission and reception via DCI without receiving CD-SSB.

For example, regarding the dynamic DL/UL for which transmission and reception of DL/UL are indicated via DCI, in a case where an indication of DL reception and/or UL transmission during the measurement gap via DCI is received, the terminal 20 may determine whether to receive CD-SSB or perform dynamic DL/UL transmission and reception via DCI, according to the implementation.

For example, regarding the configured DL/UL for which transmission and reception of DL/UL are configured by upper layer signaling, an indication of DL reception and/or UL transmission during the measurement gap according to the upper layer signaling is not required to be assumed.

For example, regarding the configured DL/UL for which transmission and reception of DL/UL are configured by upper layer signaling, in a case where an indication of DL reception and/or UL transmission during the measurement gap according to the upper layer signaling is received, the terminal 20 may receive CD-SSB and is not required to perform configured DL/UL transmission and reception according to the upper layer signaling.

For example, regarding the configured DL/UL for which transmission and reception of DL/UL are configured by upper layer signaling, in a case where an indication of DL reception and/or UL transmission during the measurement gap according to the upper layer signaling is received, the terminal 20 may perform configured DL/UL transmission and reception according to the upper layer signaling without receiving CD-SSB.

For example, regarding the configured DL/UL for which transmission and reception of DL/UL are configured by upper layer signaling, in a case where an indication of DL reception and/or UL transmission during the measurement gap according to the upper layer signaling is received, the terminal 20 may determine whether to receive CD-SSB or perform configured DL/UL transmission and reception according to the upper layer signaling, based on the implementation.

It is to be noted that the definition of the RedCap UE may be one of 1) to 3) below, or may be a different definition. In addition, the definition of the non-RedCap UE may be a UE that does not correspond to the definition of the RedCap UE, may be a UE that supports functions that are supported as mandatory by a normal UE, or may be a UE that supports a bandwidth exceeding the maximum bandwidth supported by the RedCap UE.
1) UE that has indicated that the UE itself is a RedCap UE to the network via one of Msg.1/3/A. For example, the Msg.1/A may be transmitted using a resource that is defined or configured for the RedCap UE, or an indication field in Msg3 that is defined or configured for the RedCap UE may be used for indicating that the UE itself is the RedCap UE.
2) UE that supports a specific UE capability. For example, the specific UE capability may be a UE capability of supporting up to 20 MHz bandwidth in FR1 and up to 100 MHz bandwidth in FR2. In addition, the specific UE capability may be a UE capability of supporting one or two reception branches and may be a UE capability of supporting the maximum number of DL-MIMO layers corresponding to the supported number of reception branches. In addition, the specific UE capability may be a UE capability of supporting one of FD-FDD (Full Duplex-Frequency Division Duplex) operation or Type A HD-FDD (Half Duplex-Frequency Division Duplex) operation in the FR1 FDD bands. In addition, the specific UE capability may be a UE capability of supporting one of DL up to 64 QAM (Quadrature amplitude modulation) or DL up to 256 QAM in FR1. In addition, the specific UE capability may be a UE capability of not supporting CA and/or DC.
3) UE that has reported to support the specific UE capability described in the above-described 2) to the network.

According to an embodiment of the present invention, in a case where a DL-BWP that is different from a DL-BWP for a non-RedCap UE is configured, the RedCap UE can determine to use at least one of NCD-SSB or CD-SSB, and can perform an operation of RRM, RLM, time synchronization/frequency synchronization, etc.

In other words, a synchronization signal that is used by a terminal with reduced functions can be determined in the wireless communication system.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only one of the functions in an embodiment of the present invention.

### <Base station 10>

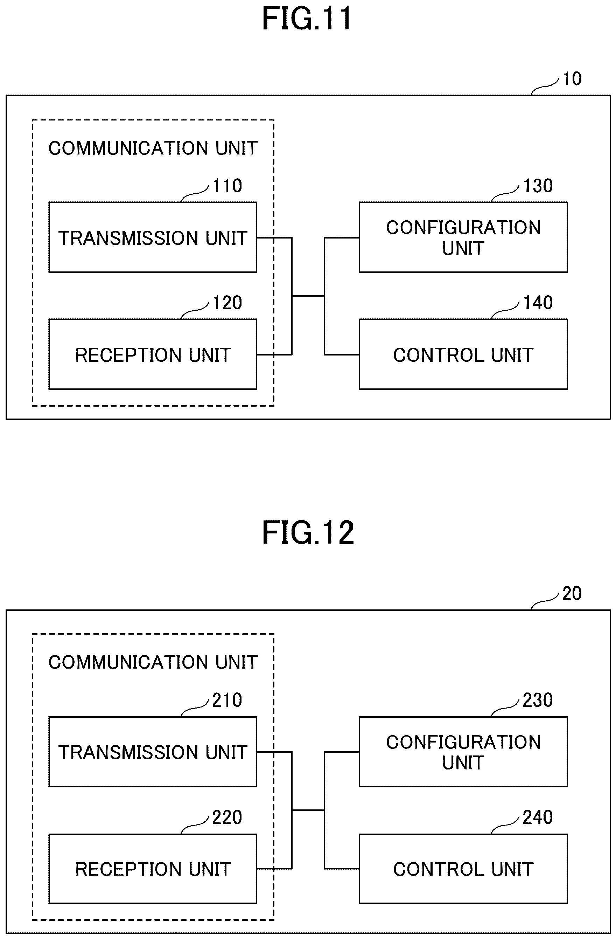

Fig. 11 is a diagram illustrating an example of a functional configuration of the base station 10. As shown in Fig. 11, the base station 10 includes a transmission unit 110, a reception unit 120, a configuration unit 130, and a control unit 140. The functional configuration illustrated in Fig. 11 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 performs, for example, resource allocation and control of the entire base station 10. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 12 is a diagram illustrating an example of a functional configuration of the terminal 20. As shown in Fig. 12, the terminal 20 includes a transmission unit 210, a reception unit 220, a configuration unit 230, and a control unit 240. The functional configuration illustrated in Fig. 12 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### (Hardware structure)

In the above block diagrams used for describing an embodiment of the present invention (Fig. 11 and Fig. 12), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

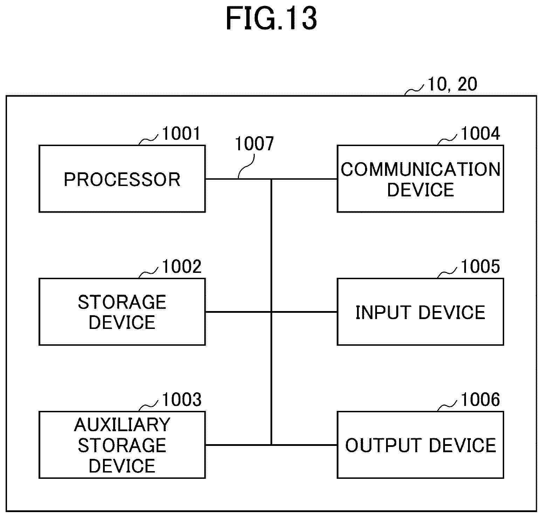

For example, the base station 10, the terminal 20, etc., according to an embodiment of the present disclosure may function as a computer for processing the radio communication method of the present disclosure. Fig. 13 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may be configured without including some of the devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 11 may be realized by control programs that are stored in the storage device 1002 and are executed by the processor 1001. Further, for example, the control unit 240 of the terminal 20 illustrated in Fig. 12 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

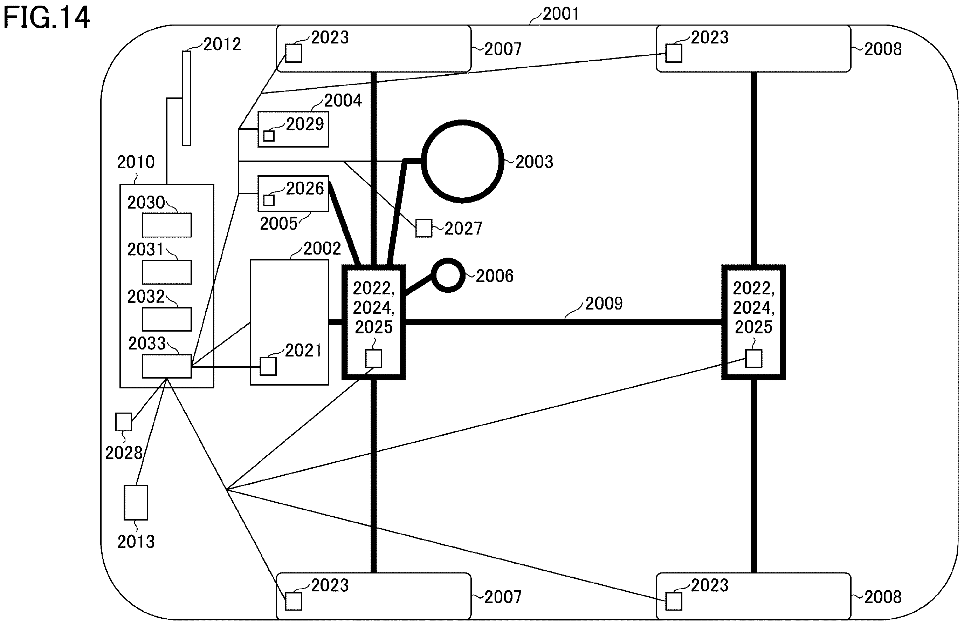

Fig. 14 shows an example of a configuration of a vehicle 2001. As shown in Fig. 14, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a communication unit configured to receive system information; and a control unit configured to configure a second DL-BWP (Downlink Bandwidth part) that is different from a first DL-BWP for a non-RedCap UE (Reduced Capability UE), based on the system information. In a case where the second DL-BWP is configured, the communication unit receives a first SSB (SS/PBCH block) that is not associated with SIB1 (System information block 1) and RMSI (Remaining minimum system information), and the control unit performs at least one of RRM (Radio Resource Monitoring), RLM (Radio Link Monitoring), BFD (Beam Failure Detection), link recovery, RO (RACH occasions) selection, handover, AGC (Auto gain control), time synchronization, or frequency synchronization, by using the first

### SSB.

According to the above-described configuration, in a case where a DL-BWP that is different from a DL-BWP for a non-RedCap UE is configured, the RedCap UE can determine to use at least one of NCD-SSB or CD-SSB, and can perform an operation of RRM, RLM, time synchronization/frequency synchronization, etc. In other words, a synchronization signal that is used by a terminal with reduced functions can be determined in the wireless communication system.

The communication unit may determine whether to receive the first SSB or receive the second SSB, based on whether or not the second DL-BWP includes a second SSB that is associated with SIB1 and RMSI. According to the above-described configuration, in a case where a DL-BWP that is different from a DL-BWP for a non-RedCap UE is configured, the RedCap UE can determine to use at least one of NCD-SSB or CD-SSB, and can perform an operation of RRM, RLM, time synchronization/frequency synchronization, etc.

The control unit may assume that the physical cell ID indicated by the first SSB is different from the physical cell ID indicated by an SSB that is associated with SIB1 and RMSI. According to the above-described configuration, in a case where a DL-BWP that is different from a DL-BWP for a non-RedCap UE is configured, the RedCap UE can receive at least one of NCD-SSB or CD-SSB, and can perform an operation of RRM, RLM, time synchronization/frequency synchronization, etc.

A corresponding relationship between the first SSB and a second SSB that is associated with SIB1 and RMSI may be specified, and the communication unit may apply a corresponding configuration related to reception of the first SSB to a configuration related to reception of the second SSB. According to the above-described configuration, in a case where a DL-BWP that is different from a DL-BWP for a non-RedCap UE is configured, the RedCap UE can receive at least one of NCD-SSB or CD-SSB, and can perform an operation of RRM, RLM, time synchronization/frequency synchronization, etc.

In a case where the communication unit receives a second SSB that is located outside an active DL-BWP and is associated with SIB1 and RMSI, the communication unit may receive the second SSB in a configured measurement gap. According to the above-described configuration, in a case where a DL-BWP that is different from a DL-BWP for a non-RedCap UE is configured, the RedCap UE can receive at least one of NCD-SSB or CD-SSB, and can perform an operation of RRM, RLM, time synchronization/frequency synchronization, etc.

In addition, according to an embodiment of the present invention, a communication method performed by a terminal is provided. The communication method includes: receiving system information; configuring a second DL-BWP (Downlink Bandwidth part) that is different from a first DL-BWP for a non-RedCap UE (Reduced Capability UE), based on the system information; in a case where the second DL-BWP is configured, receiving a first SSB (SS/PBCH block) that is not associated with SIB1 (System information block 1) and RMSI (Remaining minimum system information); and performing at least one of RRM (Radio Resource Monitoring), RLM (Radio Link Monitoring), BFD (Beam Failure Detection), link recovery, RO (RACH occasions) selection, handover, AGC (Auto gain control), time synchronization, or frequency synchronization, by using the first SSB.

According to the above-described configuration, in a case where a DL-BWP that is different from a DL-BWP for a non-RedCap UE is configured, the RedCap UE can determine to use at least one of NCD-SSB or CD-SSB, and can perform an operation of RRM, RLM, time synchronization/frequency synchronization, etc. In other words, a synchronization signal that is used by a terminal with reduced functions can be determined in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block)), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations that are supposed to be performed by the base station 10 in the present specification may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL)) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a communication unit configured to receive system information; and
a control unit configured to configure a second DL-BWP (Downlink Bandwidth part) that is different from a first DL-BWP for a non-RedCap UE (Reduced Capability UE), based on the system information, wherein
in a case where the second DL-BWP is configured, the communication unit receives a first SSB (SS/PBCH block) that is not associated with SIB1 (System information block 1) and RMSI (Remaining minimum system information), and
the control unit performs at least one of RRM (Radio Resource Monitoring), RLM (Radio Link Monitoring), BFD (Beam Failure Detection), link recovery, RO (RACH occasions) selection, handover, AGC (Auto gain control), time synchronization, or frequency synchronization, by using the first SSB.

2. The terminal as claimed in claim 1, wherein
the communication unit determines whether to receive the first SSB or receive the second SSB, based on whether or not the second DL-BWP includes a second SSB that is associated with SIB1 and RMSI.

3. The terminal as claimed in claim 1, wherein
the control unit assumes that a physical cell ID indicated by the first SSB is different from a physical cell ID indicated by an SSB that is associated with SIB1 and RMSI.

4. The terminal as claimed in claim 1, wherein
a corresponding relationship between the first SSB and a second SSB that is associated with SIB1 and RMSI is specified, and the communication unit applies a configuration related to reception of the corresponding first SSB to a configuration related to reception of the second SSB.

5. The terminal as claimed in claim 1, wherein
in a case where the communication unit receives a second SSB that is located outside an active DL-BWP and is associated with SIB1 and RMSI, the communication unit receives the second SSB in a configured measurement gap.

6. A communication method performed by a terminal, the communication method comprising:
receiving system information;
configuring a second DL-BWP (Downlink Bandwidth part) that is different from a first DL-BWP for a non-RedCap UE (Reduced Capability UE), based on the system information;
in a case where the second DL-BWP is configured, receiving a first SSB (SS/PBCH block) that is not associated with SIB1 (System information block 1) and RMSI (Remaining minimum system information); and
performing at least one of RRM (Radio Resource Monitoring), RLM (Radio Link Monitoring), BFD (Beam Failure Detection), link recovery, RO (RACH occasions) selection, handover, AGC (Auto gain control), time synchronization, or frequency synchronization, by using the first SSB.
